# EUROPEAN PATENT SPECIFICATION

(11) **EP 2 886 453 B1**
(45) Date of publication and mention of the grant of the patent: **12.06.2019**
(21) Application number: 13198176.3
(22) Date of filing: 18.12.2013
(51) Int. Cl.: B64C 21/06

(54) **Boundary layer control system and aircraft having such a boundary layer control system**
System für Grenzschichtsteuerung und Flugzeug mit dem Grenzschichtsteuersystem
Système de contrôle de couche limite et aéronef comprenant un tel système de contrôle de couche limite

(43) Date of publication of application: 24.06.2015
(73) Proprietor: Airbus Operations GmbH, 21129 Hamburg (DE)
(72) Inventor: Gerber, Martin, 28357 Bremen (DE)
(74) Representative: LKGLOBAL Lorenz & Kopf PartG mbB Patentanwälte

(56) References cited:
- EP-A2- 2 208 669
- WO-A1-2005/113336
- US-A- 5 899 416
- US-A1- 2010 181 434

## Description

### TECHNICAL FIELD

The invention relates to a boundary layer control system and an aircraft having such a boundary layer control system.

### BACKGROUND TO THE INVENTION

The efficiency of an aircraft depends on a plurality of different factors. A main factor is the aerodynamic drag, which is to be reduced to a minimum. For example, it is an aim to laminarize the flow around aerodynamic surfaces of an aircraft, such as a tailplane. For this purpose it is known to selectively suck off air from the boundary layer at leading edges of the tailplane, which normally face turbulent flow. This allows to laminarize the air flow to a certain extent. This concept is known as Hybrid Laminar Flow Control (HLFC), which permits a shift in the transition between turbulent and laminar flow through suction on the first 15 to 20% of the chord.

In a vertical or horizontal tailplane the suction of air is often accomplished through a double skin arrangement, in which a second skin is arranged downstream of a leading edge skin of the respective tailplane component, such that a suction chamber is created between the leading edge skin and the second skin. Suction is provided through active or passive suction devices.

EP 1 699 686 A1 and US 2009 0020653 A1 show a device for providing a suction of a boundary layer at the surface of an aircraft, wherein the sucked off air is supplied to an environmental control system.

US 20130270390 A1 shows an aircraft with an air sucking component with an outer surface that is perforated at least in some regions, and a suction profile body, which forms a local bulge in the outer skin and comprises a suction opening connected to the air sucking component for passively sucking off air.

EP2208669, which discloses all the features of the preamble of claim 1, further shows a known boundary layer control system.

### SUMMARY OF THE INVENTION

It is an object of the invention to provide a boundary layer control system capable of reliably laminarizing the flow on a component of an aircraft with a distinct efficiency.

This object is met by a boundary layer control system having the features of independent claim 1. Advantageous embodiments and further improvements may be gathered from the sub-claims and the following description.

A boundary layer control system in an aircraft is proposed. The boundary layer control system comprises a outflow opening arrangeable in a skin section of the aircraft, which outflow opening provides a suction force when air flows along the skin section, at least one duct couplable with the outflow opening and coupled to a boundary layer control component having perforations, a pressurized air source and an air control device, wherein the air control device is configured to selectively couple the at least one duct with one of the pressurized air source for purging the perforations of the boundary layer control component and the outflow opening for inducing a suction of air, wherein the pressurized air source is a pressurized air line, which is connectable to a bleed air port of the aircraft.

The boundary layer control system is therefore capable to suck off air from a boundary layer control component for laminarizing the flow around a flow body or any other aircraft part, to which this boundary layer control component is attached. This leads to an improved aerodynamic behaviour, which results in a reduced aerodynamic drag due to a clear reduction of turbulences in the boundary flow layer. The outflow opening may simply be a hole or an air inlet in a recess, wherein preferably the opening direction may at least partially extend vertically to the expected flow or at an angle thereto, such that in the opening a lower pressure occurs, like in a jet pump based on Bernoulli's principle. Hence, the outflow opening provides for a passive suction. This clearly decreases the necessary power for operating the boundary layer control system according to the invention.

The at least one duct is coupled with the boundary layer control component and is able to suck air from the boundary layer control component to the outflow opening, where the air exits the outflow opening and leaves into the surrounding of the aircraft.

The air control device is a device which is capable of controlling the airflow from or to the boundary layer control component. For example, during cruise flight, a permanent reduction of drag by sucking off air from the boundary layer is desired. Hence, the air control device may initiate the suction of air through the boundary layer control component to the outflow opening. This may be accomplished by a plurality of different means or methods. For example, the outflow opening may comprise a door or flap, which may be openable and closable through an actuator. The air control device may just initiate the opening or closing of this outflow opening in the outer surface. Furthermore, the outflow opening may be couplable to a suction duct by means of at least one valve, which may be controlled through the air control device. Hence, if the suction of air through the boundary layer control component is desired, the air control device may simply initiate opening of an associated valve. The air control device may also initiate a flow of air to the boundary layer control component, such that air flows through perforation of the boundary layer control component and purges these in order to remove dirt, water, de-icing fluid or any other material that is able to hinder the correct function of the boundary layer control device.

For example, an aircraft equipped with the boundary layer control system according to the invention may be de-iced through a de-icing fluid on ground, wherein this de-icing fluid may also reach the perforation of the boundary layer control component. The air control device may then simply initiate purging this component and any residual de-icing fluid is removed.

In a preferred embodiment, the air control device comprises at least one valve for selectively coupling the duct with the pressurized air source or the outflow opening. In this regard it may be preferable to block the suction when a purging is initiated and vice versa.

The source of pressurized air may be realized through a large variant of different options. While bleed air or used air from a passenger compartment are generally suitable, also ram air from a ram air inlet scoop or the such may be feasible. The requirement for the pressurized air source is a sufficient pressure for being able to provide a sufficiently large airflow through all boreholes of the perforation in order to remove any fluid or other particles.

According to the invention, the pressurized air source is a pressurized air line, which is connectable to a bleed air port of the aircraft. This may be located at a compressor stage of a main engine or may be associated with an auxiliary power unit arranged in a tail region of the aircraft. In the latter case, due to a common arrangement of an APU in a tail cone region the necessary duct lengths from the APU to the air control device are low. Especially by sucking of air from a tailplane the use of APU bleed air for purging the boundary layer control component is advantageous.

Preferably, the bleed air port and/or the pressurized air line is located downstream of a pre-cooler. The pre-cooler for bleed air may be designed according to the Certification Specifications for Large Aeroplanes (CS), regarding the ice protection envelope for supplying cabin air and wing anti-icing at the same time. Outside the ice protection envelope, the use of bleed air for purging is easily possible. If intermittent icing conditions apply, this purge function may be provided after passing a flight altitude of 31,000 foot.

Advantageously, the pressurized air line is in fluid communication with at least one flow resistance means for reducing the pressure of the pressurized air delivered by the pressurized air line. An excessive pressure at the boundary layer control component may be prevented to avoid damages. Besides the use of dedicated flow restrictors, also the use of a small diameter of the pressurized air line are possible.

For the purpose of reducing the temperature of the air delivered from the pressurized air source and increasing the flow rate, the system comprises an air injector having an outlet arranged in or downstream the pressurized air line and an air inlet couplable with a source of ambient air. Comparable to the outflow opening, the air injector device leads to the suction of air into the pressurized air line or a duct located downstream of the pressurized air line due to the Bernoulli principle, wherein the air injector thereby leads to the injection ambient air into the duct. Consequently, the flow rate is clearly increased for reducing the bleed air demand and due to the low temperature of the ambient air, the air temperature inside the duct is clearly lower than the temperature of bleed air downstream the cooler. For example, bleed air having a temperature of more than 200°C is cooled down to 100°C or less. Furthermore, a flow restrictor may be further used for reducing the bleed air pressure from exemplarily 3 bar to 1 bar or less.

Preferably, the air inlet of the air injector device is arrangeable at an outer surface of the aircraft. The opening may end directly in the surface or may end slightly outside the outer surface, such that a connection duct between the outlet of the air injector device and its inlet constitutes a snorkel for routing fresh air to the air injector over a preferably minimum distance.

In an advantageous embodiment, the outflow opening is arranged in a suction chamber, wherein the at least one duct is couplable with the outflow opening over the suction chamber. The suction chamber may be a component which is to be placed on or in the aircraft such that its outer surface contains the skin section with the outflow opening. In the suction chamber, a certain underpressure can be built up, which allows a continuous and constant suction of air, while suction force peaks are compensated through the size depending suction capacity of the suction chamber,

In a preferred embodiment, the suction chamber is designed as a part of a root portion of a horizontal tailplane. Preferably, this root portion is a part of a nose component of a horizontal tailplane, wherein the outer surface of the suction chamber is a lower surface when installed to the horizontal tailplane. The required length of the suction duct is short in case the horizontal and vertical tailplanes are to be equipped with the boundary layer control system according to the invention. Also, besides structural functions, the nose portion in a root region of the horizontal tailplane hardly has to conduct other functions. Equipping the horizontal tailplane with this suction chamber is therefore easily possible. Further, a leading edge of the horizontal tailplane may constitute or comprise at least a part of the duct, which is couplable with the air control device.

In a still further advantageous embodiment, the air control device comprises an arrangement of at least one shape memory spring and a movable body, wherein the arrangement is adapted for blocking the outflow opening, when the at least one shape memory alloy spring is exposed to a first transition temperature and to unblock the outflow opening, when the at least one shape memory alloy spring is exposed to a second transition temperature. A shape memory alloy spring reverts to a given original shape after its deformation and exposure to an imminent transition temperature. Consequently, in case suction is only desired during cruise flight of the aircraft, the outflow opening may be unblocked when the aircraft reaches an altitude, in which a certain temperature level can be expected. However, it may be blocked again when the aircraft reaches a lower altitude with a clearly higher first transition temperature. Hence, without requiring any sensors, actuators, etc., a reliable initiation of suction can be realized.

In a preferred embodiment, the shape memory spring arrangement comprises two springs in a serial connection, wherein a first spring is a tensioning spring and a second spring is a pressing spring. Both springs have different transition temperatures, such that either the first spring or the second spring reverts to its immanent original shape. Resultantly, in case the first (tensioning) spring reaches its first transition temperature, the second (pressing) spring is clearly outside the second transition temperature. Therefore, the first spring reverts to its original shape and may thereby also changes the shape of the second spring, due to its elasticity. In case the second spring reaches the second transition temperature, the shapes change the other way round. Due to the serial connection of both springs, a connection point moves when the springs change their shapes. By connecting a movable body to this point, a blocking or unblocking motion of the outflow opening may be accomplished.

In a particularly preferred embodiment, the movable body is a scoop having a suction opening and a ram air opening, wherein a planes of the suction opening and a plane of the ram air opening intersect at an angle, wherein the angle is larger than 45° and smaller than 180°, wherein the body is rotatably mounted in an opening in the skin section and couplable with a connection point of the arrangement of shape memory alloy springs, wherein depending on the temperature either the suction opening or the ram air opening extends out of the opening and faces in one of two opposed directions. The scoop may comprise a shape that is a segment of a circular hollow disk or ring or a quarter section of a hollow sphere. The plane between the two openings intersect at an angle preferably about 90° or slightly more to provide a sufficient overlap. By rotatably supporting the scoop in a center, i.e. the intersection point of the planes, it may be rotated about 90° relative to the opening in the skin section, such that either the suction opening, which represents the outflow opening, extends substantially perpendicular from the surface and the ram air opening is sealed by the opening in the surface or vice versa. Through the rotation of the scoop one of two opposed opening directions may be chosen. Hence, by coupling the scoop with the above-mentioned shape memory alloy spring arrangement, the scoop may provide an opening facing downstream during cruise flight for providing a sufficient suction effect or an opening facing upstream for receiving ram air during flight phases with a higher temperature, such as start and landing.

It is further preferred that the boundary layer control system further comprises a fan couplable to the at least one duct for increasing the pressure of pressurized air for purging the boundary layer control component. In case ram air is received for purging the perforation of the boundary layer control component it is necessary to increase the pressure of the ram air flow, since the ram air pressure cannot exceed the pressure at the boundary layer control component and would be insufficient for the purging function.

The invention also relates to an aircraft having one such boundary layer control system, preferably comprising a tailplane arrangement, wherein the boundary layer control component is arranged on a leading edge of at least one tailplane of the tailplane arrangement. For example, this may be a horizontal or a vertical tailplane.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, even irrespective of their composition in the individual claims or their interrelationships. Furthermore, identical or similar components in the figures have the same reference characters.
- Fig. 1: shows an overview of a tailplane.
- Fig. 2: shows an underside of the horizontal tailplane.
- Fig. 3: shows an air control device.
- Fig. 4: shows a possible installation position of the air control device.
- Fig. 5: shows a detailed view of an air suction chamber.
- Fig. 6: depicts the air sucking chamber in a lateral view.
- Fig. 7: shows a vertical tailplane in a sectional view.
- Fig. 8: depicts the pressure over all components.
- Fig. 9: shows a tail with a outflow opening of another exemplary embodiment.
- Figs. 10a-10e: show a rotatable scoop with a shape memory alloy spring arrangement.
- Fig. 11: shows a schematic drawing of an air injector.

### DETAILED DESCRIPTION OF EXEMPLARY EMBODIMENTS

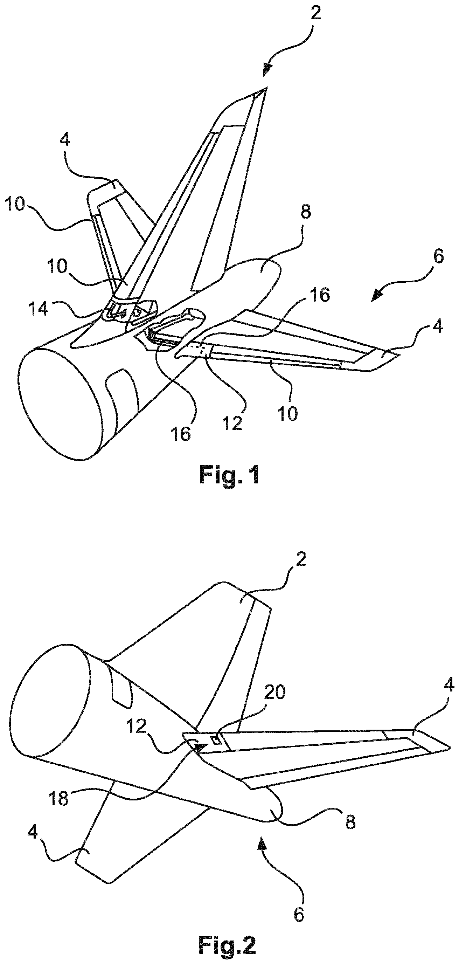

Fig. 1 shows an overview of a tailplane having a vertical tailplane 2, two horizontal tailplanes 4, which are arranged vertical to each other at a tail 6 of an aircraft. Downstream of the vertical tailplane 2 and the horizontal tailplanes 4, a tail cone 8 is present. The tailplanes 2 and 4 comprise nose sections 10 as boundary layer control components, which are perforated and allow to move air through the nose sections 10, i.e. sucking of air or blowing of air. By sucking of air through the nose sections 10, a laminar flow control is enabled, since the boundary flow layer will be stabilised, preferably during cruise flight. The aerodynamic drag of the tailplanes 2 and 4 is thereby clearly decreased.

According to the this exemplary embodiment, a suction chamber 12 is arranged in a root region of one of the horizontal tailplanes 4, which is couplable to the nose sections 10 through ducts 14 and 16. Duct 16 exemplarily extends along a front spar of the horizontal tailplane 4, such that the necessary distance to an air control device is minimized. The duct 16 may comprise gimbals for compensating trim movements of the horizontal tailplane and extends into the suction chamber 12. The function of the suction chamber 12 is explained further below.

In Fig. 2, an underside of the horizontal tailplanes 4 is visible. The suction chamber 12 comprises an skin section, which is shown as an outer surface 18 comprising a outflow opening 20, which extends to the surrounding of the aircraft. It is apparent, that the direction of the outflow opening 20 is extending angularly to the expected flow. Due to the Bernoulli effect a suction force at the outflow opening 20 is created in case the aircraft moves relative to air. As the suction chamber 12 is couplable to the nose sections 10 of the tailplanes 2 and 4, a passive suction of air may be accomplished. Resultantly, the laminarization may be accomplished without any active element.

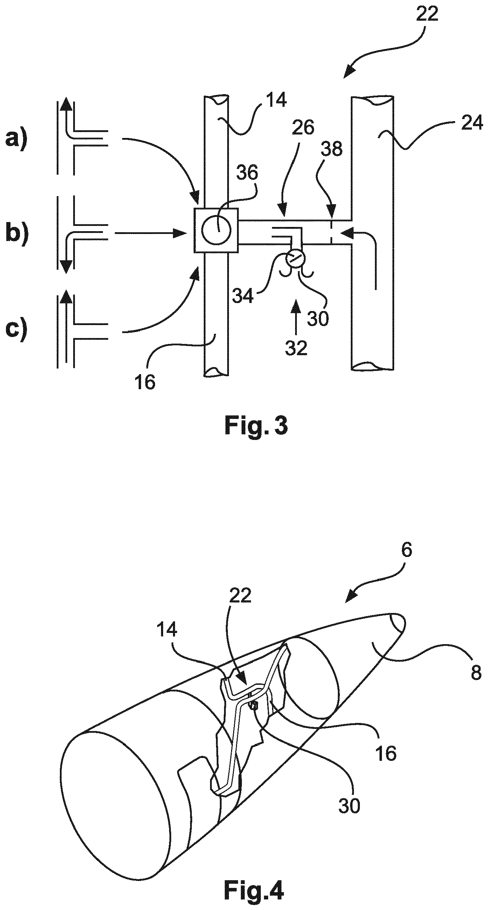

In Fig. 3, an air control device 22 is shown, which is couplable to the above-mentioned ducts 14 for the horizontal tailplanes 4 and 16 for the vertical tailplane 2. Further, a pressurized air line in the form of an APU bleed air line 24 is present, which extends from the air control device 22 into the tail cone 8, where an APU may be present (not depicted in Fig. 3). Further, an air injector 26 is present, which extends into a connection line 28 and has an inlet 30 for ambient air 32.

A bleed air valve (not shown) may allow to let bleed air flow into the connection line 28. Further downstream, the supply ducts 14 and 16 are couplable by means of a control valve 36 to the pressurized air line 24. The control valve 36 may comprise three or more distinct flow control positions, indicated with a), b) and c). In case bleed air shall flow into the vertical tailplane 2, the flow control position a) shall be used. In case bleed air shall flow into the horizontal tailplanes 4, the flow control position b) shall be used. However, another flow control position may be feasible to provide both the horizontal and vertical tailplanes with bleed air for purging the boundary layer control components at the same time, if a sufficient pressure and flow rate is available. In case suction of air shall be accomplished, the flow control position c) may be feasible, in which ducts 14 and 16 are connected to each other. As the duct 16 runs through the nose region of the horizontal tailplanes 4, it may cross the suction chamber 12 and be directly coupled with the outflow opening 20, such that the suction force acts along the whole duct 16. By simply connecting duct 14 to duct 16, the suction force also acts on the boundary layer control component of the vertical tailplane 2.

In case bleed air flows from the bleed air duct 24 to the connection line 28, ambient air is sucked into the connection line 28 through the air injector 26, which is closable through an injector valve 34. Further, it will then flow to the supply ducts 14 and 16, depending on the flow control position of the control valve 36. A flow restrictor 38 as a flow resistance means upstream of the air injector 26 reduces the pressure of the bleed air entering the connection line 28. Altogether, the volume flow rate downstream the air injector 26 is clearly increased, which reduces the required bleed air volume flow rate. Further, due to the clearly lower temperature of the ambient air compared to bleed air, the temperature of the air reaching the supply ducts 14 and 16 are decreased.

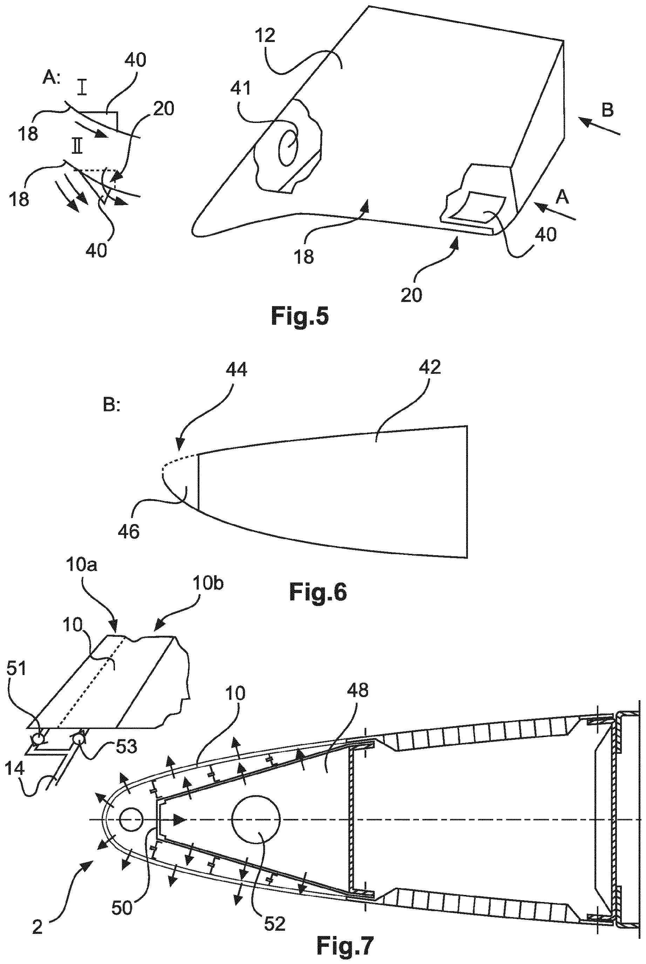

Through a control logic, or just through receiving a signal, purging the nose sections 10 may be accomplished through introducing bleed air. In this operational case, the opening 20, which is connected to the supply ducts 14 and 16, should be closed through a cover 40 (see option I in Fig. 5).

Fig. 4 shows a possible installation position in the tail 6 of the aircraft. For the purpose of better visibility, the vertical and horizontal tailplanes 2, 4 are removed in this view.

In Fig. 5, a detailed view of the suction chamber 12 is provided. Here, the opening 20 is closable by a cover 40, which is shown in a first state I (closed) and in a second state II (open). Depending on the opening state, a suction force is present at the opening 20, which leads to a suction on the nose sections 10 of the tailplanes 2, 4 for the laminarization of the flow. Coupling the suction chamber 12 and the outflow opening 20 is accomplished through a port 41, which extends into the interior of the tailplane root region.

Fig. 6 shows the air sucking chamber 12 in a lateral view (view B as indicated in Fig. 5), in which a hollow chamber 42 is indicated, into which air is sucked from the connected nose sections 10. Still further, Fig. 6 shows an exemplary embodiment of a perforated nose region 44 and a leading edge suction duct 46.

Fig. 7 exemplarily shows a vertical tailplane 2 in a sectional view with a central duct 48 constituted in a self-contained structure 50, wherein a flange 52 is connectable to the supply duct 16. Exemplarily, one-way valves 51 and 53 provide for a routing of the airflow depending on their direction, i.e. for purging the airflow should be applied more to the nose edge (region 10a), while sucking of air may take place in a slight distance thereto (region 10b).

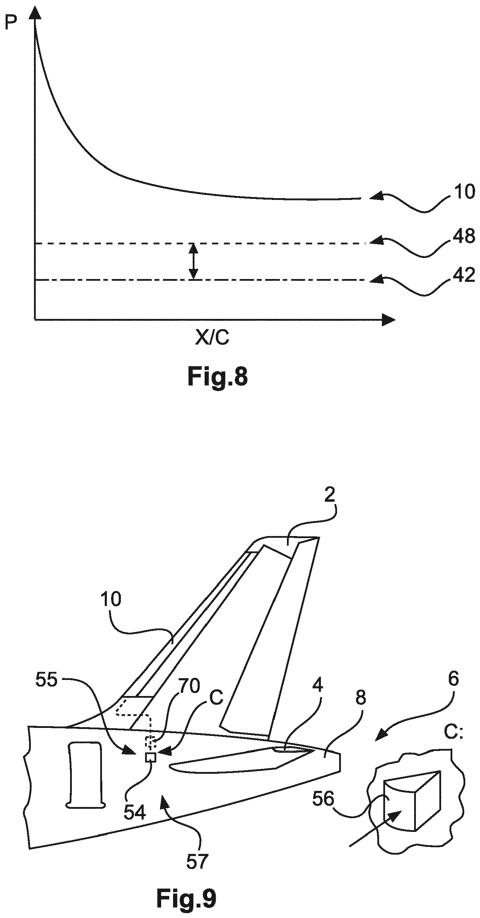

Fig. 8 demonstrates that the pressure in the air suction chamber 42 is clearly lower than the effective suction pressure in the exemplary central duct 48 and directly at the nose section 10. Hence, the flow resistance should be optimized in order to maintain a sufficient suction of air at the nose sections 10.

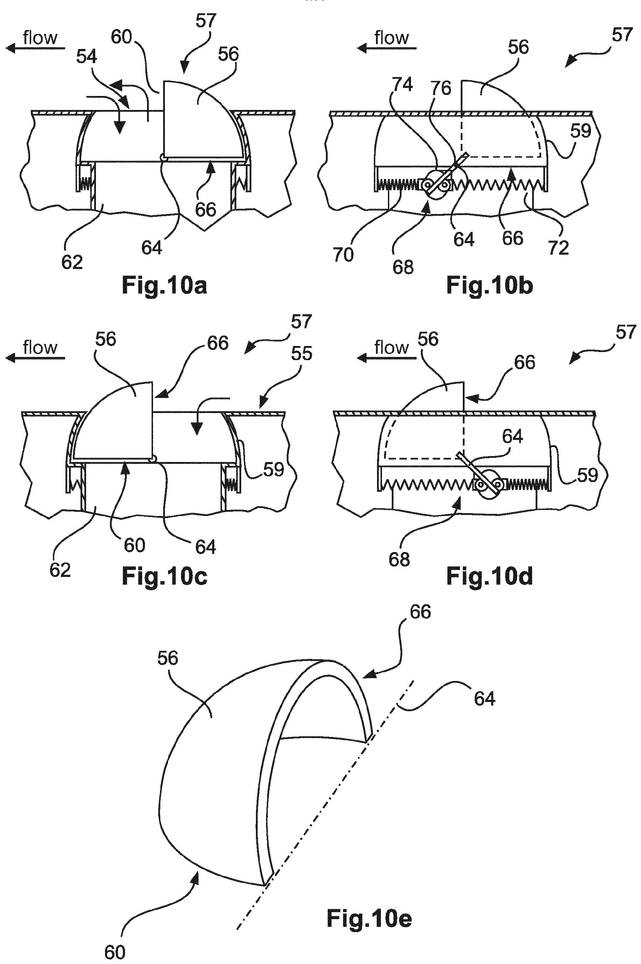

Fig. 9 shows another exemplary embodiment with an opening 54 arranged in front of a horizontal tailplane 4 in a skin section 55 of the aircraft. Again, due to the Bernoulli effect, a suction force is created at the opening 54 in case it is open. Detail C shows a scoop 56, which is rotatably arranged in the opening 54. With this rotatable scoop 56, the opening 54 may either act as a ram air opening or as a suction opening. How this is accomplished is further shown in Figs. 10a-10e with an air control device 57, wherein the direction of flow in Figs. 10a-10d runs from the right to the left (as indicated by an arrow), which is opposite the direction of flight.

Fig. 10a shows the movably supported body, i.e. a rotatably supported scoop 56, which is movably around a rotational axis 64 and may change its position in a guide 59, which is in fluid communication with the opening 54, in a first position. Here, a suction opening 60 faces downstream the skin section 55, i.e. towards the tail cone 8. Hence, in the viewing direction of Fig. 10a, the surrounding airflow around the aircraft passes from the right to the left over the scoop 56. Hence, a suction force is created in the suction opening 60. By connecting a connection or suction duct 62, which is in fluid communication with opening 54, to the ducts 14 and 16, a suction of air through the nose sections 10 to the opening 54 is accomplished.

As explained above, the scoop 56 is rotatably supported on a rotational axis 64, wherein the rotational axis 64 may be situated in a center of a hollow ring or sphere, which corresponds to the shape of the scoop 56. Preferably, the scoop 56 may be rotated around 90°. If the scoop 56 comprises a shape of a segment of a hollow disk or a hollow ring, a ram air opening 66 may be brought to a position facing upstream, as shown in Fig. 10c. The suction opening 60 is hidden inside the suction duct 62 and is not exposed to the ambient anymore. In the position in Fig. 10c, scoop 56 acts as a ram air inlet.

As demonstrated, the rotational axis 64 is inwards directed from the outer surface 55, such that one of the suction opening 60 and the ram air opening 66 may always be sealed.

Also, the scoop 56 may be a quarter segment of a hollow sphere-shaped body. The guide 59 should then be a section of a (half) sphere.

In order to eliminate active components for moving the scoop 56 between the two positions, Figs. 10b and 10d show a shape memory alloy spring arrangement 68. This arrangement 68 exemplarily comprises a first spring 70 and a second spring 72, which are mechanically connected in a series connection. In a connecting region 74, which may be a joint, a rotatably supported lever 76 is coupled with the shape memory alloy spring arrangement 68. If the joint 74 moves in a lateral direction, the lever 76 rotates around the rotational axis 64 and thereby rotates the scoop 56.

The rotation may be accomplished through the design characteristics of the first spring 70 and the second spring 72. For example, the first spring 70 is a tensioning spring, which urges into an original shape when it reaches a first transition temperature immanent to the first spring 70 due to its material composition. Further, the second spring 72 may be a pressing spring, which purges into its original shape when it reaches a second transition temperature. In Fig. 10b, the second spring 72 has reached its original immanent shape, which leads to a compression of the first spring 70, which is outside the first transition temperature associated with the first spring 70. This may exemplarily be the case during a cruise flight, when the second transition temperature equals a typical maximum temperature at a cruise flight altitude. In lower altitudes, the first spring may reach its first transition temperature limit, such that the scoop 56 moves into the opposite direction. This enables a precise and reliable control of the scoop 56 completely independent of active elements.

For providing a purging function, a fan or compressor 70, which is shown in Fig. 9, is necessary, as the ram air pressure may not be able to overcome the pressure at the nose sections 10 induced by the impinging flow.

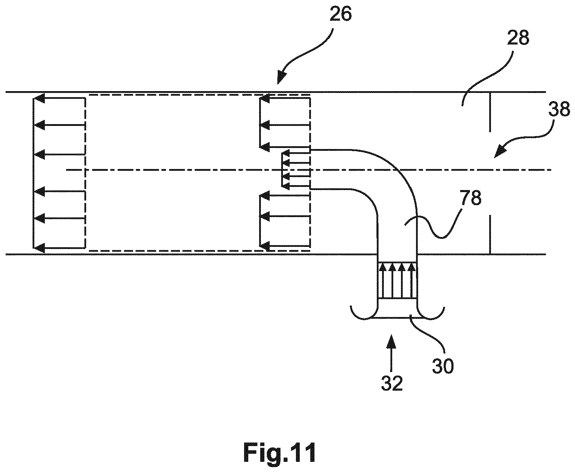

Finally, Fig. 11 shows the air injector 26 in a larger size. Here, connection line 28 comprises a snorkel 78 reaching from an outside of the connection line 28 and outside a fuselage of the aircraft to its inside. By air flowing through the flow restrictor 38 over the snorkel 78, air 32 is sucked into the connection line. Thus, the volume flow rate is increased and the temperature is decreased.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. A boundary layer control system for an aircraft, comprising:
- an outflow opening (20, 60) arrangeable in a skin section (18, 55) of the aircraft, which outflow opening (20, 60) provides a suction force when air flows along the skin section (18, 55),
- at least one duct (14, 16) couplable with the outflow opening (20, 60) and coupled to a boundary layer control component (10) having perforations,
- a pressurized air source, and
- an air control device (22),
wherein the air control device (22) is configured to selectively couple the at least one duct (14, 16) with one of:
- the pressurized air source for purging the perforations of the boundary layer control component (10) and
- the outflow opening (20,60) for inducing a suction of air through the perforations into the boundary layer control component (10), **characterized in that** the pressurized air source is a pressurized air line (24), which is connectable to a bleed air port of the aircraft.

2. The boundary layer control system of claim 1,
wherein the air control device (22) comprises at least one valve (36) for selectively coupling the at least one duct (14, 16) with the pressurized air source or the outflow opening (20, 60).

3. The boundary layer control system of claim 1 or 2,
wherein the bleed air port is associated with an auxiliary power unit arranged in a tail region (6) of the aircraft.

4. The boundary layer control system of any of the previous claims,
wherein the pressurized air line (24) is in fluid communication with at least one flow resistance means (38) for reducing the pressure of the pressurized air delivered by the pressurized air line (24).

5. The boundary layer control system of any of the previous claims,
further comprising an air injector (26) having an outlet arranged in or downstream the pressurized air line (24) and an air inlet (32) couplable with a source of ambient air.

6. The boundary layer control system of claim 5,
wherein the air inlet (32) is arrangeable at an outer surface of the aircraft.

7. The boundary layer control system of any of the previous claims,
wherein the outflow opening (20, 60) is arranged in a suction chamber (12) and wherein the at least one duct (14, 16) is couplable with the outflow opening (20, 60) over the suction chamber (12).

8. The boundary layer control system of claim 7,
wherein the suction chamber (12) is a part of a root portion of a horizontal tailplane (4).

9. The boundary layer control system of claim 1,
wherein the air control device (22) comprises an arrangement of at least one shape memory alloy spring (70, 72) and a movable body (56),
wherein the arrangement is adapted for blocking the outflow opening (20, 60), when the at least one shape memory alloy spring (70, 72) is exposed to a first transition temperature and to unblock the outflow opening (20, 60), when the at least one shape memory alloy spring (70, 72) is exposed to a second transition temperature.

10. The boundary layer control system of claim 9,
wherein the arrangement of shape memory alloy springs (70, 72) comprises two shape memory alloy springs (70, 72) in a serial connection,
wherein a first spring (70) is a tensioning spring and a second spring (72) is a pressing spring,
wherein the first spring (70) and the second spring (72) comprise different transition temperatures.

11. The boundary layer control system of claim 9 or 10,
wherein the movable body (56) is a scoop having a suction opening (60) and a ram air opening (66),
wherein a plane of the suction opening (60) and a plane of the ram air opening (66) intersect at an angle larger than 45° and smaller than 180°,
wherein the body (56) is rotatably mounted in an opening (54) in the skin section and couplable with a connection point of the arrangement of shape memory alloy springs (70, 72),
wherein depending on the temperature either the suction opening (60) or the ram air opening (66) extends out of the opening (54) and faces in one of two opposed directions.

12. The boundary layer control system of one of any of the previous claims,
further comprising a fan couplable to the at least one duct (14, 16) for increasing the pressure of pressurized air for purging the boundary layer control component (10).

13. An aircraft having a boundary layer control system of one of claims 1 to 12.

14. The aircraft of claim 13, further comprising a tailplane arrangement, wherein the boundary layer control component (10) is arranged on a leading edge of at least one tailplane of the tailplane arrangement.

## Patentansprüche

1. Grenzschichtsteuersystem für ein Flugzeug, das Folgendes umfasst:
- eine Ausströmungsöffnung (20, 60), anordenbar in einem Hautabschnitt (18, 55) des Flugzeugs, wobei die Ausströmungsöffnung (20, 60) eine Saugkraft bereitstellt, wenn Luft am Hautabschnitt (18, 55) entlang strömt,
- zumindest einen Kanal (14, 16), koppelbar mit der Ausströmungsöffnung (20, 60) und gekoppelt mit einer Grenzschichtsteuerkomponente (10), die Perforationen aufweist,
- eine Druckluftquelle, und
- eine Luftsteuervorrichtung (22),
wobei die Luftsteuervorrichtung (22) dazu ausgelegt ist, den zumindest einen Kanal (14, 16) gezielt zu koppeln mit einem aus:
- der Druckluftquelle zum Spülen der Perforationen der Grenzschichtsteuerkomponente (10) und
- der Ausströmungsöffnung (20, 60) zum Bewirken einer Ansaugung von Luft durch die Perforationen in die Grenzschichtsteuerkomponente (10),
**dadurch gekennzeichnet, dass** die Druckluftquelle eine Druckluftleitung (24) ist, die mit einem Entlüftungsanschluss des Flugzeugs verbindbar ist.

2. Grenzschichtsteuersystem nach Anspruch 1,
wobei die Luftsteuervorrichtung (22) zumindest ein Ventil (36) zum gezielten Koppeln des zumindest einen Kanals (14, 16) mit der Druckluftquelle oder der Ausströmungsöffnung (20, 60) umfasst.

3. Grenzschichtsteuersystem nach Anspruch 1 oder 2,
wobei der Entlüftungsanschluss mit einer Hilfsleistungseinheit verknüpft ist, die in einem Heckbereich (6) des Flugzeugs angeordnet ist.

4. Grenzschichtsteuersystem nach einem der vorhergehenden Ansprüche,
wobei die Druckluftleitung (24) in Fluidverbindung mit zumindest einem Flusswiderstandsmittel (38) zum Verringern des Drucks der durch die Druckluftleitung (24) zugeführten Druckluft steht.

5. Grenzschichtsteuersystem nach einem der vorhergehenden Ansprüche,
ferner umfassend eine Lufteinspritzdüse (26) mit einem Auslass, angeordnet in oder nachgelagert der Druckluftleitung (24), und einen Lufteinlass (32), koppelbar mit einer Quelle von Umgebungsluft.

6. Grenzschichtsteuersystem nach Anspruch 5,
wobei der Lufteinlass (32) auf einer äußeren Oberfläche des Flugzeugs anordenbar ist.

7. Grenzschichtsteuersystem nach einem der vorhergehenden Ansprüche,
wobei die Ausströmungsöffnung (20, 60) in einer Saugkammer (12) angeordnet ist und wobei der zumindest eine Kanal (14, 16) über die Saugkammer (12) mit der Ausströmungsöffnung (20, 60) koppelbar ist.

8. Grenzschichtsteuersystem nach Anspruch 7,
wobei die Saugkammer (12) ein Teil eines Wurzelteils einer horizontalen Flosse (4) ist.

9. Grenzschichtsteuersystem nach Anspruch 1,
wobei die Luftsteuervorrichtung (22) eine Anordnung aus zumindest einer Feder aus Formgedächtnislegierung (70, 72) und einem bewegbaren Körper (56) umfasst,
wobei die Anordnung angepasst ist, um die Ausströmungsöffnung (20, 60) zu blockieren, wenn die zumindest eine Feder aus Formgedächtnislegierung (70, 72) einer ersten Übergangstemperatur ausgesetzt wird, und um die Blockierung der Ausströmungsöffnung (20, 60) aufzuheben, wenn die zumindest eine Feder aus Formgedächtnislegierung (70, 72) einer zweiten Übergangstemperatur ausgesetzt wird.

10. Grenzschichtsteuersystem nach Anspruch 9,
wobei die Anordnung aus Federn aus Formgedächtnislegierung (70, 72) zwei Federn aus Formgedächtnislegierung (70, 72) in einer seriellen Verbindung umfasst, wobei eine erste Feder (70) eine Zugfeder ist und eine zweite Feder (72) eine Druckfeder ist,
wobei die erste Feder (70) und die zweite Feder (72) unterschiedliche Übergangstemperaturen umfassen.

11. Grenzschichtsteuersystem nach Anspruch 9 oder 10,
wobei der bewegbare Körper (56) eine Kelle mit einer Saugöffnung (60) und einer Stauluftöffnung (66) ist, wobei sich eine Ebene der Saugöffnung (60) und eine Ebene der Stauluftöffnung (66) bei einem Winkel größer als 45° und kleiner als 180° schneiden,
wobei der Körper (56) drehbar in einer Öffnung (54) im Hautabschnitt montiert ist und mit einem Verbindungspunkt der Anordnung aus Federn aus Formgedächtnislegierung (70, 72) koppelbar ist,
wobei sich abhängig von der Temperatur entweder die Saugöffnung (60) oder die Stauluftöffnung (66) aus der Öffnung (54) heraus erstreckt und in eine von zwei entgegengesetzten Richtungen weist.

12. Grenzschichtsteuersystem nach einem der vorhergehenden Ansprüche,
ferner umfassend ein Gebläse, koppelbar mit dem zumindest einen Kanal (14, 16) zum Erhöhen des Drucks der Druckluft zum Spülen der Grenzschichtsteuerkomponente (10).

13. Flugzeug mit einem Grenzschichtsteuersystem nach einem der Ansprüche 1 bis 12.

14. Flugzeug nach Anspruch 13, ferner umfassend eine Flossenanordnung, wobei die Grenzschichtsteuerkomponente (10) an einer Vorderkante von zumindest einer Flosse der Flossenanordnung angeordnet ist.

## Revendications

1. Système de contrôle de la couche limite pour un aéronef, comprenant :
- une ouverture d'échappement (20, 60) susceptible d'être agencée dans une section de revêtement (18, 55) de l'aéronef, laquelle ouverture d'échappement (20, 60) procure une force d'aspiration lorsque de l'air s'écoule le long de la section de revêtement (18, 55),
- au moins un conduit (14, 16) susceptible d'être accouplé à l'ouverture d'échappement (20, 60) et accouplé à un composant de contrôle de la couche limite (10) pourvu de perforations,
- une source d'air sous pression, et
- un dispositif de régulation d'air (22),
le dispositif de régulation d'air (22) étant configuré pour accoupler de façon sélective l'au moins un conduit (14, 16) :
- soit à la source d'air sous pression aux fins de purger les perforations du composant de contrôle de la couche limite (10)
- soit à l'ouverture d'échappement (20, 60) aux fins d'induire une aspiration d'air au travers des perforations jusque dans le composant de contrôle de la couche limite (10),
**caractérisé en ce que** la source d'air sous pression consiste en une canalisation d'air sous pression (24), laquelle est susceptible d'être raccordée à un orifice de prélèvement d'air de l'aéronef.

2. Système de contrôle de la couche limite selon la revendication 1,
dans lequel le dispositif de régulation d'air (22) comprend au moins une vanne (36) destinée à accoupler de façon sélective l'au moins un conduit (14, 16) à la source d'air sous pression ou à l'ouverture d'échappement (20, 60).

3. Système de contrôle de la couche limite selon la revendication 1 ou 2,
dans lequel l'orifice de prélèvement d'air est associé à un groupe auxiliaire de puissance agencé dans une région de queue (6) de l'aéronef.

4. Système de contrôle de la couche limite selon l'une quelconque des revendications précédentes,
dans lequel la canalisation d'air sous pression (24) est en communication fluidique avec au moins un moyen de résistance à l'écoulement (38) destiné à réduire la pression de l'air sous pression délivré par la canalisation d'air sous pression (24).

5. Système de contrôle de la couche limite selon l'une quelconque des revendications précédentes, comprenant en outre un injecteur d'air (26) pourvu d'une sortie agencée dans la canalisation d'air sous pression (24) ou en aval de celle-ci et d'une entrée d'air (32) susceptible d'être accouplée à une source d'air ambiant.

6. Système de contrôle de la couche limite selon la revendication 5,
dans lequel l'entrée d'air (32) est susceptible d'être agencée au niveau d'une surface extérieure de l'aéronef.

7. Système de contrôle de la couche limite selon l'une quelconque des revendications précédentes,
dans lequel l'ouverture d'échappement (20, 60) est agencée dans une chambre d'aspiration (12), et dans lequel l'au moins un conduit (14, 16) est susceptible d'être accouplé à l'ouverture d'échappement (20, 60) par l'intermédiaire de la chambre d'aspiration (12).

8. Système de contrôle de la couche limite selon la revendication 7,
dans lequel la chambre d'aspiration (12) fait partie d'une partie pied d'un empennage arrière horizontal (4) .

9. Système de contrôle de la couche limite selon la revendication 1,
dans lequel le dispositif de régulation d'air (22) comprend un agencement d'au moins un ressort en alliage à mémoire de forme (70, 72) et d'un corps mobile (56), dans lequel l'agencement est adapté à boucher l'ouverture d'échappement (20, 60) lorsque l'au moins un ressort en alliage à mémoire de forme (70, 72) est exposé à une première température de transition et à déboucher l'ouverture d'échappement (20, 60) lorsque l'au moins un ressort en alliage à mémoire de forme (70, 72) est exposé à une deuxième température de transition.

10. Système de contrôle de la couche limite selon la revendication 9,
dans lequel l'agencement de ressorts en alliage à mémoire de forme (70, 72) comprend deux ressorts en alliage à mémoire de forme (70, 72) raccordés en série, dans lequel un premier ressort (70) consiste en un ressort de tension et un deuxième ressort (72) consiste en un ressort de compression,
dans lequel le premier ressort (70) et le deuxième ressort (72) comprennent des températures de transition différentes.

11. Système de contrôle de la couche limite selon la revendication 9 ou 10,
dans lequel le corps mobile (56) consiste en une écope pourvue d'une ouverture d'aspiration (60) et d'une ouverture d'air dynamique (66),
dans lequel un plan de l'ouverture d'aspiration (60) et un plan de l'ouverture d'air dynamique (66) se coupent selon un angle supérieur à 45° et inférieur à 180°, dans lequel le corps (56) est monté rotatif dans une ouverture (54) dans la section de revêtement et susceptible d'être accouplé à un point de raccordement de l'agencement de ressorts en alliage à mémoire de forme (70, 72),
dans lequel, en fonction de la température, soit l'ouverture d'aspiration (60), soit l'ouverture d'air dynamique (66) fait saillie de l'ouverture (54) et est tournée vers l'une de deux directions opposées.

12. Système de contrôle de la couche limite selon l'une quelconque des revendications précédentes, comprenant en outre une soufflante susceptible d'être accouplée à l'au moins un conduit (14, 16), destinée à accroître la pression d'air sous pression aux fins de purger le composant de contrôle de la couche limite (10) .

13. Aéronef pourvu d'un système de contrôle de la couche limite selon l'une des revendications 1 à 12.

14. Aéronef selon la revendication 13, comprenant en outre un agencement d'empennages arrière, le composant de contrôle de la couche limite (10) étant agencé sur un bord d'attaque d'au moins un empennage arrière de l'agencement d'empennages arrière.
